# EUROPÄISCHE PATENTSCHRIFT

(11) **EP 2 627 714 B1**
(45) Veröffentlichungstag und Bekanntmachung des Hinweises auf die Patenterteilung: **04.03.2015**
(21) Anmeldenummer: 11764525.9
(22) Anmeldetag: 27.09.2011
(51) Int. Cl.: C08L 83/04

(54) **SCHLEIFBARE SILICONELASTOMERZUSAMMENSETZUNG UND DEREN VERWENDUNG**
GRINDABLE SILICONE ELASTOMER COMPOSITION AND THE USE THEREOF
COMPOSITION D'ÉLASTOMÈRE DE SILICONE POUVANT ÊTRE POLIE ET SON UTILISATION

(30) Priorität: 12.10.2010 DE 102010042352
(43) Veröffentlichungstag der Anmeldung: 21.08.2013
(73) Patentinhaber: Wacker Chemie AG, 81737 München (DE)
(72) Erfinder: KELLER, Wolfgang, 84489 Burghausen (DE); BRENNENSTUHL, Werner, 84508 Burgkirchen (DE); KÖLLNBERGER, Andreas, 84375 Kirchdorf (DE)
(74) Vertreter: Mieskes, Klaus Theoderich
(86) Internationale Anmeldenummer: PCT/EP2011/066783
(87) Internationale Veröffentlichungsnummer: WO 2012/049020

(56) Entgegenhaltungen:
- EP-A1- 1 475 069
- US-A1- 2010 183 814

## Beschreibung

Die vorliegende Erfindung betrifft eine Produktformulierung auf Basis von Siliconelastomerzusammensetzungen für das temporäre Verkleben eines zu schleifenden oder zu polierenden Werkstückes an ein Trägersubstrat, wobei die Siliconelastomerzusammensetzung nach Aushärtung schleifbar oder polierbar ist.

Werkstücke müssen für einen Schleifprozess mechanisch fixiert werden. Bei hochpreisigen Werkstücken wie z.B. Schmucksteinen, optischen Linsen, Kunstgegenständen oder Halbleiterwafern verursacht dies häufig Beschädigungen am Werkstück oder die Befestigung zeigt nicht die gewünschte Stabilität. Daher besteht ein Bedarf an alternativen Befestigungsmethoden. Eine Möglichkeit besteht darin das Werkstück über eine temporäre Verklebung zu fixieren. Da beim Prozess des Schleifens oder Polierens nicht vermeidbar ist, dass die Schleifeinrichtung auch mit dem Kleber in Kontakt kommen kann, muss auch der Kleber schleifbar sein, da es sonst beispielsweise zu Materialbrüchen führen würde oder die Schleifapparatur verschmutz oder beschädigt wird. Daneben ist eine gute Temperaturbeständigkeit bis über 300°C notwendig, um die durch das Schleifen oder Polieren verursachte Reibung und damit Temperaturerhöhung zu überstehen. Temperaturbeständigkeit ist zudem notwendig, da nachfolgende Prozessierungsschritte des Werkstückes in einem hohen Temperaturbereich erfolgen können. Auch Chemikalienbeständigkeit ist eine wichtige Eigenschaft für einen solchen Kleber wie beispielsweise gegen Reinigungschemikalien.

Zudem sind die minimale Freisetzung von flüchtigen Nebenprodukten und die Viskosität der unvernetzten Siliconelastomerzusammensetzung wichtig, um beispielsweise die Kontaminationsgefahr und Gesundheitsgefährdung niedrig zu halten und ein geeignetes Auftragen auf das Werkstück zu ermöglichen. Zudem muss der Kleber nach dem Schleifen oder Polieren vom Werkstück einfach und möglichst rückstandsfrei ablösbar sein.

Aufgabe der vorliegenden Anmeldung war daher die Bereitstellung eines geeigneten Klebers für das Fixieren von Werkstücken welcher nach Aushärtung schleifbar oder polierbar, temperatur-, chemikalienbeständig und leicht auftragbar ist und wieder unproblematisch vom Werkstück entfernt werden kann ohne dabei das Werkstück oder die Schleif- oder Poliervorrichtung zu beschädigen oder zu verschmutzen.

Diese Aufgabe wurde gelöst durch die erfindungsgemäßen vernetzbaren Siliconelastomerzusammensetzungen, enthaltend (E) 35-80 Gew.% mindestens einer Verbindung ausgewählt aus der Gruppe enthaltend nicht-verstärkende Füllstoffe, verzweigte Siliconharze oder deren Mischungen.

Nach vernetzen der erfindungsgemäßen Siliconelastomerzusammensetzungen zeigt der vernetzte, Siliconkautschuk eine Shore A Härte nach DIN 53505 zwischen 30 und 95, der Weiterreißwiderstand nach ASTM D624-B-91 höchstens 4 N/mm, bevorzugt höchstens 3 N/mm, die Reißdehnung nach DIN 53504-85S1 höchstens 150%, bevorzugt höchstens 100% und die Reißfestigkeit nach DIN 53504-85S1 höchstens 3 N/mm2 aufweist, bevorzugt höchstens 2 N/mm2.

Nicht-verstärkende Füllstoffe (E) sind solche Füllstoffe, die die mechanische Festigkeit, wie beispielsweise Weiterreißwiderstand, Reißdehnung und Reißfestigkeit des vernetzten Silikonkautschuks, nicht wesentlich verbessern. Erfindungswesentlich ist dabei, dass sie in solchen Menge in der Siliconelastomerzusammensetzungen enthalten sind, dass sie beim vernetzten Silikonkautschuk zu den oben genannten für Silikonkautschuke unüblich schlechten Werten der mechanischen Festigkeit führen.

Erfindungsgemäße Siliconelastomerzusammensetzungen können kondensationsvernetzende, additionsvernetzende oder peroxidvernetzende Zusammensetzungen sein, die im Stand der Technik bekannt sind. Bevorzugt sind es additionsvernetzende Siliconelastomerzusammensetzungen.

Additionsvernetzende Siliconelastomerzusammensetzungen enthalten neben (E)
(A) 20-60 Gew.% lineare Verbindungen, die Reste mit aliphatischen Kohlenstoff-Kohlenstoff-Mehrfachbindungen aufweisen, bevorzugt 35-50 Gew.% (A)
(B) 1-10 Gew.% lineare Organopolysiloxane mit Si-gebundenen Wasserstoffatomen, bevorzugt 2-8 Gew.% (B) oder anstelle von (A) und (B)
(C) 30-60 Gew.% lineare Organopolysiloxane, die SiC-gebundene Reste mit aliphatischen Kohlenstoff-Kohlenstoff Mehrfachbindungen und Si-gebundene Wasserstoffatome aufweisen, bevorzugt 40-55 Gew.% (C) und
(D) mindestens einen Hydrosilylierungskatalysator.

Der erfindungsgemäße Siliconkautschuk wird hergestellt durch Vernetzung der erfindungsgemäßen Siliconelastomerzusammensetzungen.

Vorteile der erfindungsgemäßen Siliconelastomerzusammensetzungen sind, dass sie aufgrund der Shore A Härte nach DIN 53505 zwischen 30 und 95, bevorzugt 40 und 80, und der Kombination der oben genannten Mechanikwerte schleifbar bzw. polierbar nach der Aushärtung der Zusammensetzung sind und somit das Werkstück nicht bricht oder beschädigt wird. Zudem sind sie mit üblichen industriellen Verfahren auftragbar (zum Beispiel Spritzbeschichten, Drucken, Tauchen, Rotationsbeschichten), und lassen sich zum gewünschten Zeitpunkt über geeignete Verfahren rückstandsfrei vom Werkstück lösen.

Weiterhin zeigen sie annähernd Newtonsches Fliessverhalten mit geringer Scherverdünnung (kein Gelzustand bei Nullscherung), um das auftragen einer gleichmäßigen Schichtdicke über die geplante temporäre Kelbefläche zu gewährleisten. Die erfindungsgemäßen Siliconelastomerzusammensetzungen weisen ein Verhältnis der dynamischen Viskosität bei den Scherraten 1 s⁻¹ und 100 s⁻¹ bei Raumtemperatur von höchstens 3 auf. Bevorzug höchstens 2, besonders bevorzugt höchstens 1,2. Die dynamische Viskosität bei Raumtemperatur und einer Scherrate von 1 s⁻¹ der unvernetzten erfindungsgemäßen Siliconelastomerzusammensetzungen beträgt zwischen 10 und 20.000 mPa·s, bevorzugt zwischen 50 und 10.000 mPa·s.

Zudem zeigen sie sehr geringe Anteile flüchtiger Bestandteile, um Kontaminationen und Blasenbildung bei der Bearbeitung zu verhindern. Wobei die Massendifferenz des ausgehärteten Silikonkautschuks in der thermogravimetrischen Analyse (TGA) - bei einer Aufheizrate von 10 K / min bis 300 °C und einem Luft- oder Stickstoffstrom von 30 ml/min - zwischen Raumtemperatur und 300°C höchstens 2 Gew.%, bevorzugt 1 Gew.% und besonders bevorzugt 0,5 Gew.% beträgt. Zudem zeigen sie niedrige Nachbildungsraten flüchtiger Bestandteile.

Die vernetzten Siliconelastomerzusammensetzungen weisen eine hohe Temperaturstabilität auf, >250°C über mehrere Stunden und bei Spitzen bis >300°.

Die erfindungsgemäßen vernetzbaren Siliconelastomerzusammensetzungen haben den Vorteil dass sie in einem einfachen Verfahren unter Verwendung leicht zugänglicher Ausgangsstoffe und damit wirtschaftlich hergestellt werden können. Die erfindungsgemäßen vernetzbaren Zusammensetzungen haben den weiteren Vorteil, dass sie als einkomponentige Formulierung bei 25°C und Umgebungsdruck eine gute Lagerstabilität aufweisen und erst bei erhöhter Temperatur rasch vernetzen. Die erfindungsgemäßen Siliconzusammensetzungen haben den Vorteil, dass diese bei zweikomponentiger Formulierung nach Vermischen der beiden Komponenten eine vernetzungsfähige Siliconzusammensetzung ergeben, deren Verarbeitbarkeit über einen langen Zeitraum hinweg bei 25°C und Umgebungsdruck bestehen bleibt, also extrem lange Topfzeit zeigen, und erst bei erhöhter Temperatur rasch vernetzt.

Bei den erfindungsgemäßen Zusammensetzungen kann es sich um Einkomponenten-Siliconzusammensetzungen wie auch um Zweikomponenten-Siliconzusammensetzungen handeln. In letzterem Fall können die beiden Komponenten der erfindungsgemäßen Zusammensetzungen alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B) und (D) bzw. (C) und (D) enthält. Vorzugsweise handelt es sich bei den erfindungsgemäßen Zusammensetzungen jedoch um Einkomponenten-Zusammensetzungen. Die erfindungsgemäßen Einkomponenten-Silconelastomerzusammensetzungen werden durch vermischen aller Bestandteile nach dem Stand der Technik hergestellt.

Die in den erfindungsgemäßen additionsvernetzenden Zusammensetzungen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist. Auch möglich sind Mischungen aus (A) und (B) und (C) mit den oben genannten Verhältnissen von aliphatisch ungesättigten Resten und Si-gebundenen Wasserstoffatomen.

Bei der erfindungsgemäß eingesetzten Verbindung (A) kann es sich um siliciumfreie organische Verbindungen mit vorzugsweise mindestens zwei aliphatisch ungesättigten Gruppen sowie um lineare Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykoldiacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die erfindungsgemäßen Siliconzusammensetzungen als Bestandteil (A) mindestens eine aliphatisch ungesättigte lineare Organosiliciumverbindung, wobei alle bisher in additionsvernetzenden Zusammensetzungen verwendeten, aliphatisch ungesättigten linearen Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare Organopolysiloxane aus Einheiten der allgemeinen Formel (II)

RₐR¹_{b}SiO_{(4-a-b)/2} (II)

eingesetzt, wobei
R unabhängig voneinander, gleich oder verschieden, ein von aliphatischen Kohlenstoff-Kohlenstoff-Mehrfachbindungen freien, organischen oder anorganischen Rest,
R¹ unabhängig voneinander, gleich oder verschieden einen einwertigen, substituierten oder nicht substituierten, SiC-gebundenen Kohlenwasserstoffrest mit mindestens einer aliphatischen Kohlenstoff-Kohlenstoff-Mehrfachbindung,
a 1, 2 oder 3 ist, und
b 1 oder 2 ist
bedeuten,
mit der Maßgabe, dass die Summe a + b kleiner oder gleich 3 ist und mindestens 2 Reste R¹ je Molekül vorliegen.

Bei Rest R kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der Formel (II) miteinander verbinden.

Weitere Beispiele für R sind die einwertigen Reste -F, -Cl, - Br, OR², -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß Formel (II) Si-gebundene Reste. Falls es sich bei Rest R um SiC-gebundene, substituierte Kohlenwasserstoffreste handelt, sind bevorzugte Substituenten Halogenatome, phosphorhaltige Reste, Cyanoreste, -OR², -NR²-, -NR²₂, -NR²-C(O)-NR²₂, -C(O)-NR²₂, -C(O)R₂, -C(O)OR², -SO₂-Ph und -C₆F₅. Dabei bedeuten R² unabhängig voneinander, gleich oder verschieden ein Wasserstoffatom oder einen einwertigen Kohlenwasserstoffrest mit 1 bis 20 Kohlenstoffatomen und Ph gleich dem Phenylrest.

Beispiele für Reste R sind Alkylreste, wie der Methyl-, Ethyl-, n-Propyl-, iso-Propyl-, n-Butyl-, iso-Butyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der ß-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)-N(R²)C(O)NR²₂, (CH₂)ₙ-C(O)NR²₂, - -(CH₂)ₙ-C(O)R², (CH₂)ₙ-C(O)OR², -(CH₂)ₙ-C(O)NR²₂, (CH₂)-C(O)-(CH₂)ₘC(O)CH₃,- (CH₂)-O-CO-R²,-(CH₂)-NR²-(CH₂)ₘ-NR²2, (CH₂)ₙ-O-(CH₂)ₘCH(OH)CH₂OH, - (CH₂)ₙ(OCH₂CH₂)ₘOR², - (CH₂)ₙ-SO₂-Ph und - (CH₂)ₙ-O-C₆F₅, wobei R² und Ph der oben dafür angegebene Bedeutung entspricht und n und m gleiche oder verschiedene ganze Zahlen zwischen 0 und 10 bedeuten.

Beispiele für R gleich zweiwertige, beidseitig gemäß Formel (II) Si-gebundene Reste sind solche, die sich von den voranstehenden für Rest R genannten einwertigen Beispiele dadurch ableiten, dass eine zusätzliche Bindung durch Substitution eines Wasserstoffatoms erfolgt, Beispiele für derartige Reste sind -(CH₂)-, -CH(CH₃)-, -C(CH₃)₂-, -CH(CH₃)-CH₂-, -C₆H₄-,-CH(Ph)-CH₂-, -C(CF₃)₂-, -(CH₂)ₙ-C₆H₄-(CH₂)ₙ-, - (CH₂)ₙ-C₆H₄-C₆H₄-(CH₂)ₙ-, -(CH₂O)ₘ, (CH₂CH₂O)ₘ, (CH₂)ₙ-Oₓ-C₆H₄-SO₂-C₆H₄-Oₓ-(CH₂)ₙ-, wobei x 0 oder 1 ist, und Ph, m und n die voranstehend genannte Bedeutung haben.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R¹ kann es sich um beliebige, einer Anlagerungsreaktion (Hydrosilylierung) mit einer SiH-funktionellen Verbindung zugängliche Gruppen handeln.

Falls es sich bei Rest R¹ um SiC-gebundene, substituierte Kohlenwasserstoffreste handelt, sind als Substituenten Halogenatome, Cyanoreste und -OR² bevorzugt, wobei R² die obengenannte Bedeutung hat.

Bevorzugt handelt es sich bei Rest R¹ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenkmittel).

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Als Organopolysiloxane (B), die Si-gebundene Wasserstoffatome aufweisen, werden vorzugsweise lineare Organopolysiloxane aus Einheiten der allgemeinen Formel (III)

R_{c}H_{d}SiO_{(4-c-d)/2} (III)

eingesetzt, wobei
R die oben angegebene Bedeutung hat,
c 0, 1, 2 oder 3 ist und
d 0, 1 oder 2 ist,
mit der Maßgabe, dass die Summe von c + d kleiner oder gleich 3 ist und mindestens zwei Si gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear sein. Lineare Polysiloxane (B) sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung hat.

Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa●s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Siliconzusammensetzungen enthalten, dass das Molverhältnis von SiH-Gruppen zu aliphatisch ungesättigten Gruppen aus (A) bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Siliconzusammensetzungen lineare Organopolysiloxane (C), die gleichzeitig aliphatische Kohlenstoff-Kohlenstoff-Mehrfachbindungen und Si-gebundene Wasserstoffatome aufweisen, enthalten. Auch können die erfindungsgemäßen Siliconzusammensetzungen alle drei Komponenten (A), (B) und (C) enthalten.

Falls Siloxane (C) eingesetzt werden, handelt es sich vorzugsweise um solche aus Einheiten der allgemeinen Formeln (IV), (V) und (VI)

R_{f}SiO_{4/2} (IV)

R_{g}R¹SiO_{3-g/2} (V)

RₕHSiO_{3-h/2} (VI)

wobei
R und R¹ die oben dafür angegebene Bedeutung haben
f 1, 2 oder 3 ist,
g 1 oder 2 ist und
h 1 oder 2 ist,
mit der Maßgabe, dass je Molekül mindestens 2 Reste R¹ und mindestens 2 Si-gebundene Wasserstoffatome vorliegen.

Die Organopolysiloxane (C) besitzen vorzugsweise eine durchschnittliche Viskosität von 0,01 bis 500.000 Pa●s, besonders bevorzugt 0,1 bis 100.000 Pa●s jeweils bei 25°C. Organopolysiloxane (C) sind nach in der Chemie gängigen Methoden herstellbar.

Als Hydrosilylierungskatalysator (D) können alle dem Stand der Technik bekannten Katalysatoren verwendet werden. Komponente (D) kann ein Platingruppenmetall sein, beispielsweise Platin, Rhodium, Ruthenium, Palladium, Osmium oder Iridium, eine metallorganische Verbindung oder eine Kombination davon. Beispiele für Komponente (D) sind Verbindungen wie Hexachloroplatin(IV)-säure, Platindichlorid, Platinacetylacetonat und Komplexe der besagten Verbindungen, die in einer Matrix oder einer kernschalenartigen Struktur eingekapselt sind. Zu den Platinkomplexen mit niedrigem Molekulargewicht der Organopolysiloxane gehören 1,3-Diethenyl-l, 1,3,3 - Tetramethyldisiloxan-Komplexe mit Platin. Weitere Beispiele sind Platinphosphitkomplexe, Platinphosphinkomplexe oder Alkylplatinkomplexe. Diese Verbindungen können in einer Harzmatrix eingekapselt sein.

Die Konzentration von Komponente (D) ist zum katalysieren der Hydrosilylierungsreaktion der Komponenten (A) und (B) bei Einwirkung ausreichend, um die hier in dem beschriebenen Verfahren erforderliche Wärme zu erzeugen. Die Menge an Komponente (D) kann zwischen 0,1 und 1.000 Teile pro Million (ppm), 0,5 und 100 ppm oder 1 und 25 ppm des Platingruppenmetalls betragen, je nach Gesamtgewicht der Komponenten. Die Härtungsrate kann gering sein, wenn der Bestandteil des Platingruppenmetalls bei unter 1 ppm liegt. Die Verwendung von mehr als 100 ppm des Platingruppenmetalls ist unwirtschaftlich oder kann die Stabilität der Zusammensetzung verringern.

Der Bestandteil (E) wird ausgewählt aus der Gruppe enthaltend nicht-verstärkende Füllstoffe wie beispielsweise Calciumcarbonat, Eisenoxid, Aluminiumoxid, hydratisiertes Aluminiumoxid, Titandioxid, Kieselerde, Quarz, Kalziumsulfat und Ähnliche, verzweigte Siliconharze oder deren Mischungen.

Handelt es sich bei (E) um nicht-verstärkende Füllstoffe, so ist Aluminiumoxid bevorzugt.

Die Korngrößen der nicht-verstärkenden Füllstoffe (E) sind kleiner 100µm, vorzugsweise kleiner 80µm insbesondere kleiner 60µm.

Vorzugsweise enthalten die erfindungsgemäßen Siliconzusammensetzungen als Bestandteil (E) verzweigte Siliconharze, aus Einheiten der allgemeinen Formeln (VII), (VIII) und (IX)

RₙSiO_{4/2} x (VI)

RₖR¹ₗSiO_{(4-k-l)/2} (VIII)

RₒHSiO_{3-o/2} (IX)

wobei
**R** und **R¹** unabhängig voneinander, die oben genannte Bedeutung tragen,
**n** 0, 1, 2 oder 3 ist,
**k** 0, 1 oder 2 ist,
**l** 0, 1 oder 2 ist und
**o** 0, 1 oder 2 ist,
mit der Maßgabe, dass mindestens eine T- oder Q-Einheit pro Molekül vorhanden ist.

Auch die Struktur der den Bestandteil (E) bildenden Moleküle ist nicht festgelegt; insbesondere kann die Struktur eines höhermolekularen, also oligomeren oder polymeren Siloxans verzweigt oder auch harzartig, netzwerkartig sein. Verzweigte und netzwerkartige Polysiloxane enthalten zusätzlich trifunktionelle und/oder tetrafunktionelle Einheiten, wobei solche der Formeln HSiO_{3/2}, RSiO_{3/2}, R¹SiO_{3/2} und SiO_{4/2} bevorzugt sind und R und R¹ die obige Bedeutung haben. Selbstverständlich können auch Mischungen unterschiedlicher, den Kriterien des Bestandteils (E) genügender Siliconharze eingesetzt werden.

Die erfindungsgemäßen Siliconelastomerzusammensetzungen können optional alle weiteren Zusatzstoffe enthalten, die auch bisher zur Herstellung von additionsvernetzbaren Zusammensetzungen eingesetzt wurden. Beispiele für verstärkende Füllstoffe (F), die als Komponente in den erfindungsgemäßen Siliconzusammensetzungen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind. Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich. Der Gehalt der erfindungsgemäßen vernetzbaren Zusammensetzung an aktiv verstärkendem Füllstoff liegt im Bereich von 0 bis 70 Gew.-%, vorzugsweise bei 0 bis 50 Gew.-%.

Die erfindungsgemäße Silconelastomerzusammensetzung kann wahlweise als Bestandteile weitere Zusätze (G) zu einem Anteil von bis zu 70 Gew.-%, vorzugsweise 0,0001 bis 40 Gew.-%, enthalten. Diese Zusätze können, verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Tone, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Metallstäube, Farbstoffe, Pigmente usw.

Diese Füllstoffe können zudem wärmeleitend oder elektrisch leitend sein. Beispiele für wärmeleitende Füllstoffe sind Aluminiumnitrid; Bariumtitanat; Berylliumoxid; Bornitrid; Diamant; Grafit; Magnesiumoxid; partikuläres Metall wie beispielsweise Kupfer, Gold, Nickel oder Silber; Siliziumcarbid; Wolframcarbid; Zinkoxid und eine Kombination davon. Wärmeleitende Füllstoffe sind im Stand der Technik bekannt und im Handel erhältlich. Es können eine Kombination aus Füllstoffen mit verschiedenen Partikelgrößen und unterschiedlicher Partikelgrößenverteilung verwendet werden.

Die erfindungsgemäße Siliconelastomerzusammensetzung kann zusätzlich optional Lösungsmittel (H) enthalten. Es ist jedoch darauf zu achten, dass das Lösemittel keine nachteiligen Effekte auf das Gesamtsystem hat. Geeignete Lösungsmittel sind im Stand der Technik bekannt und im Handel erhältlich. Das Lösungsmittel kann beispielsweise ein organisches Lösungsmittel mit 3 bis 20 Kohlenstoffatomen sein. Zu den Beispielen für Lösungsmittel gehören aliphatische Kohlenwasserstoffe wie beispielsweise Nonan, Decalin und Dodecan; aromatische Kohlenwasserstoffe wie beispielsweise Mesitylen, Xylen und Toluen; Ester wie beispielsweise Ethylacetat und Butyrolacton; Ether wie beispielsweise n-Butylether und Polyethylenglycolmonomethylether; Ketone wie beispielsweise Methylisobutylketon und Methylpentylketon; Siliconfluid wie beispielsweise lineare, verzweigte und zyklische Polydimethylsiloxane und Kombinationen aus diesen Lösungsmitteln. Die optimale Konzentration eines bestimmten Lösungsmittels in der erfindungsgemäßen Siliconelastomerzusammensetzung kann durch Routineversuche leicht bestimmt werden. Je nach Gewicht der Verbindung kann die Menge des Lösungsmittels zwischen 0 und 95 % bzw. zwischen 1 und 95 % liegen.

Als weitere optionale Komponenten (K) können Inhibitoren und Stabilisatoren zugesetzt werden. Sie dienen der gezielten Einstellung der Verarbeitungszeit, Anspringtemperatur und Vernetzungsgeschwindigkeit der erfindungsgemäßen Siliconzusammensetzungen. Diese Inhibitoren und Stabilisatoren sind auf dem Gebiet der additionsvernetzenden Zusammensetzungen sehr gut bekannt. Beispiele gebräuchlicher Inhibitoren sind acetylenische Alkohole, wie 1-Ethinyl-1-cyclohexanol, 2-Methyl-3-butin-2-ol und 3.5-Dimethyl-1-hexin-3-ol, 3-Methyl-1-dodecin-3-ol, Polymethylvinylcyclosiloxane wie 1,3,5,7-Tetravinyltetramethyltetracyclosiloxan niedermolekulare Siliconöle mit Methylvinyl-SiO_{1/2}-Gruppen und/oder R₂vinylSiO_{1/2}-Endgruppen. wie Divinyltetramethydisiloxan Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfurmarat, organische Hydroperoxide wie Cumolhydroperoxid, tert-Butylhydroperoxid und Pinanhydroperoxid, organische Peroxide, organische Sulfoxide organische Amine. Diamine und Amide, Phosphane und Phosphite, Nitrile, Triazole, Diaziridine und Oxime. Die Wirkung dieser Inhibitorzusätze (K) hängt von ihrer chemischen Struktur ab, so dass die Konzentration individuell bestimmt werden muss. Inhibitoren und Inhibitormischungen werden vorzugsweise in einem Mengenanteil von 0,00001 % bis 5 % bezogen auf das Gesamtgewicht der Mischung zugesetzt, bevorzugt 0,00005 bis 2 % und besonders bevorzugt 0,0001 bis 1 %.

### Beispiele:

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf die dynamische Viskosität bei einer Temperatur von 20°C und einer Scherung von 1 s⁻¹. Die nachfolgenden Beispiele erläutern die Erfindung, ohne dabei beschränkend zu wirken. Alle Beispiele geben die Gesamtzusammensetzung der vernetzten Produkte wieder, ob diese als ein- oder zweikomponenten-Zusammensetzungen formuliert werden, spielt dabei keine Rolle.

Es werden folgende Abkürzungen verwendet:

| | |
|---|---|
| Kat. | Platinkatalysator |
| Bsp. | Beispiel |
| VBsp. | Vergleichsbeispiel |
| Nr. | Nummer |
| PDMS | Polydimethylsiloxan |
| Gew.% | entspricht Gewichtsprozent |
| Shore A | Härte nach DIN 53505 |
| WRW | Weiterreißwiderstand nach ASTM D624-B-94 in N/mm |
| RD | Reißdehnung nach DIN 53504-85S1 in % |
| RF | Reißfestigkeit nach DIN 53504-85S1 in N/mm² |

Bei den unten stehenden Beispielen wurde als Platinkatalysator ein Platin-Divinyltetramethyldisiloxan-Komplex (Karstedt-Katalysator) verwendet.

Bei den unten stehenden Beispielen weisen die SiH-Kammvernetzer dynamische Viskositäten von 30 bis 400 mPa●s auf.

### Beispiel 1: Siliconelastomerzusammensetzung 1

22 Gew.% eines vinylterminierten linearen PDMS mit einer Viskosität von 200 mPa●s
20 Gew.% eines vinylterminierten linearen PDMS mit einer Viskosität von 20000 mPa●s
54 Gew.% eines sphärischen Aluminiumoxids mit einer maximalen Teilchengröße von 80 µm
4 Gew.% eines linearen SiH-Kammvernetzers mit einem Wasserstoffgehalt von 0,17 Gew.%
100 ppm 1-Ethinylcyclohexanol
10 ppm Platinkatalysator bezogen auf das Metall

### Beispiel 2: Siliconelastomerzusammensetzung 2

34 Gew.% eines vinylterminierten linearen PDMS mit einer Viskosität von 200 mPa●s
60 Gew.% eines vinylgruppenhaltigen MQ-Harzes
6 Gew.% eines linearen SiH-Kammvernetzers mit einem Wasserstoffgehalt von 0,5 Gew.%
200 ppm 1-Ethinylcyclohexanol
10 ppm Platinkatalysator bezogen auf das Metall

### Beispiel 3: Siliconelastomerzusammensetzung 3

30 Gew.% eines vinylterminierten linearen PDMS mit einer Viskosität von 200 mPa●s
65 Gew.% eines vinylfunktionellen MQ-Harzes
5 Gew.% eines linearen SiH-Kammvernetzers mit einem Wasserstoffgehalt von 0,7 Gew.%
100 ppm 1-Ethinylcyclohexanol
10 ppm Platinkatalysator bezogen auf das Metall

### Beispiel 4: Siliconelastomerzusammensetzung 4

45 Gew.% eines vinylterminierten linearen PDMS mit einer Viskosität von 1000 mPa●s
50 Gew.% eines nicht funktionellen MQ-Harzes
5 Gew.% eines linearen SiH-Kammvernetzers mit einem Wasserstoffgehalt von 0,35 Gew.%
100 ppm 1-Ethinylcyclohexanol
10 ppm Platinkatalysator bezogen auf das Metall

### Beispiel 5: Siliconelastomerzusammensetzung 5

45 Gew.% eines vinylterminierten linearen PDMS mit einer Viskosität von 200 mPa●s
55 Gew.% eines Calciumcarbonats mit einer maximalen Teilchengröße von 50 µm
4 Gew.% eines linearen SiH-Kammvernetzers mit einem Wasserstoffgehalt von 0,35 Gew.%
100 ppm 1-Ethinylcyclohexanol
10 ppm Platinkatalysator bezogen auf das Metall

### Beispiel 6: Siliconelastomerzusammensetzung 6

41 Gew.% eines vinylterminierten linearen PDMS mit einer Viskosität von 200 mPa●s
58 Gew.% eines Titandioxids mit einer maximalen Teilchengröße von 100µm
1 Gew.% eines peroxidischen Vernetzers

### Beispiel 7: Siliconelastomerzusammensetzung 7

41 Gew.% eines OH-terminierten linearen PDMS mit einer Viskosität von 1000 mPa●s
55 Gew.% eines Aluminiumoxids mit einer maximalen Teilchengröße von 80 µm
4 Gew.% eines Alkoxysilanvernetzers
500 ppm Kondensationskatalysator

### Vergleichsbeispiel 8: Siliconelastomerzusammensetzung 8

76 Gew.% eines vinylterminierten linearen PDMS mit einer Viskosität von 1000 mPa●s
20 Gew.% einer pyrogenen Kieselsäure mit einer BET-Oberfläche von 200 m²/g
4 Gew.% eines linearen SiH-Kammvernetzers mit einem Wasserstoffgehalt von 0,35 Gew%
200 ppm 1-Ethinylcyclohexanol
10 ppm Platinkatalysator bezogen auf das Metall

In Tabelle 1 sind die Ergebnisse der Messungen zu der mechanischen Festigkeit der vernetzten Siliconkautschuke aufgeführt. Die vernetzten Siliconkautschuke aus Beispiel 1 bis 7 waren schleifbar wohingegen Vergleichsbeispiel 8 nicht schleifbar war.

**Tabelle 1**

| | **Shore A** | **WRW** | **RD** | **RF** | **erfindungsgemäß** |
|---|---|---|---|---|---|
| Bsp. 1 | 35 | 2,4 | 90 | 0,6 | ja |
| Bsp. 2 | 65 | 2,2 | 56 | 1,8 | ja |
| Bsp. 3 | 80 | 1,5 | 40 | 1,4 | ja |
| Bsp. 4 | 45 | 2,8 | 130 | 2,2 | ja |
| Bsp. 5 | 55 | 2,0 | 90 | 1,9 | ja |
| Bsp. 6 | 60 | 1,3 | 70 | 2,5 | ja |
| Bsp. 7 | 40 | 1,2 | 110 | 2,0 | ja |
| VBsp. 8 | 30 | 5,2 | 300 | 4,3 | nein |

## Patentansprüche

1. Verwendung eines Klebers für das Fixieren von Werkstücken, welche nach der Aushärtung des Klebers geschliffen und poliert werden, **dadurch gekennzeichnet, dass**
der Kleber eine vernetzbare Siliconelastomerzusammensetzung ist, enthaltend
(E) 35-80 Gew.% mindestens einer Verbindung ausgewählt aus der Gruppe enthaltend nicht-verstärkende Füllstoffe, verzweigte Siliconharze oder deren Mischungen, und dass die vernetzbare Siliconelastomerzusammensetzung ein Verhältnis der dynamischen Viskosität bei den Scherraten 1 s⁻¹ und 100 s⁻¹ bei Raumtemperatur von höchstens 1,2 aufweist, und dass der vernetzte Siliconkautschuk eine Shore A Härte nach DIN 53505 zwischen 30 und 95, der Weiterreißwiderstand nach ASTM D624-B-91 höchstens 4 N/mm, die Reißdehnung nach DIN 53504-85S1 höchstens 150% und die Reißfestigkeit nach DIN 53504-85S1 höchstens 3N/mm² aufweist.

2. Verwendung gemäß Anspruch 1, **dadurch gekennzeichnet, dass** die vernetzbare Si-liconelastomerzusammensetzung eine additionsvernetzende Zusammensetzung ist.

3. Verwendung gemäß Anspruch 1, **dadurch gekennzeichnet, dass** die vernetzbare Siliconelastomerzusammensetzung eine kondensationsvernetzende Zusammensetzung ist.

4. Verwendung gemäß Anspruch 1, **dadurch gekennzeichnet, dass** die vernetzbare Siliconelastomerzusammensetzung eine peroxidvernetzende Zusammensetzung ist.

5. Verwendung gemäß Anspruch 2, **dadurch gekennzeichnet, dass** die additionsvernetzende Siliconelastomerzusammensetzung neben (E) die folgenden Komponenten enthält
(A) 20-60 Gew.% lineare Verbindungen, die Reste mit aliphatischen Kohlenstoff-Kohlenstoff-Mehrfachbindungen aufweisen,
(B) 1-10 Gew.% lineare Organopolysiloxane mit Si-gebundenen Wasserstoffatomen
oder anstelle von (A) und (B)
(C) 30-60 Gew.% lineare Organopolysiloxane, die SiC-gebundene Reste mit aliphatischen Kohlenstoff-Kohlenstoff Mehrfachbindungen und Si-gebundene Wasserstoffatome aufweisen und
(D) mindestens einen Hydrosilylierungskatalysator.

## Claims

1. Use of an adhesive for fastening workpieces which are sanded and polished after curing of the adhesive, **characterized in that**
the adhesive is a crosslinkable silicone elastomer composition comprising
(E) 35-80% by weight of at least one compound selected from the group containing nonreinforcing fillers, branched silicone resins or mixtures thereof, and **in that** the crosslinkable silicone elastomer composition has a ratio of the dynamic viscosity at the shear rates of 1 s⁻¹ and 100 s⁻¹ at room temperature of not more than 1.2, and **in that** the crosslinked silicone rubber has a Shore A hardness to DIN 53505 of between 30 and 95, the tear propagation resistance to ASTM D624-B-91 of not more than 4 N/mm, the elongation at break to DIN 53504-85S1 of not more than 150%, and the tensile strength to DIN 53504-85S1 of not more than 3 N/mm².

2. Use according to Claim 1, **characterized in that** the crosslinkable silicone elastomer composition is an addition-crosslinking composition.

3. Use according to Claim 1, **characterized in that** the crosslinkable silicone elastomer composition is a condensation-crosslinking composition.

4. Use according to Claim 1, **characterized in that** the crosslinkable silicone elastomer composition is a peroxide-crosslinking composition.

5. Use according to Claim 2, **characterized in that** besides (E) the addition-crosslinking silicone elastomer composition comprises the following components
(A) 20-60% by weight of linear compounds containing radicals having aliphatic carbon-carbon multiple bonds,
(B) 1-10% by weight of linear organopolysiloxanes having Si-bonded hydrogen atoms
or instead of (A) and (B)
(C) 30-60% by weight of linear organopolysiloxanes containing SiC-bonded radicals having aliphatic carbon-carbon multiple bonds and Si-bonded hydrogen atoms, and
(D) at least one hydrosilylation catalyst.

## Revendications

1. Utilisation d'une colle pour la fixation de pièces à usiner qui sont meulées et polies après le durcissement de la colle, **caractérisée en ce que** la colle est une composition d'élastomère de silicone réticulable contenant
(E) 35-80% en poids d'au moins un composé choisi dans le groupe contenant des charges non renforçantes, des résines de silicone ramifiées ou leurs mélanges et **en ce que** la composition d'élastomère de silicone réticulable présente un rapport des viscosités dynamiques à des taux de cisaillement de 1 s⁻¹ et 100 s⁻¹ à température ambiante d'au plus 1,2 et **en ce que** le caoutchouc de silicone réticulé présente une dureté Shore A selon la norme DIN 53505 entre 30 et 95, une résistance à la propagation d'une déchirure selon la norme ASTM D624-B-91 d'au plus 4 N/mm, un allongement à la déchirure selon la norme DIN 53504-85S1 d'au plus 150% et une résistance à la déchirure selon la norme DIN 53504-85S1 d'au plus 3 N/mm².

2. Utilisation selon la revendication 1, **caractérisée en ce que** la composition d'élastomère de silicone réticulable est une composition réticulant par addition.

3. Utilisation selon la revendication 1, **caractérisée en ce que** la composition d'élastomère de silicone réticulable est une composition réticulant par condensation.

4. Utilisation selon la revendication 1, **caractérisée en ce que** la composition d'élastomère de silicone réticulable est une composition réticulant par un peroxyde.

5. Utilisation selon la revendication 2, **caractérisée en ce que** la composition d'élastomère de silicone réticulant par addition contient, outre (E), les composants suivants
(A) 20-60% en poids de composés linéaires qui présentent des radicaux dotés de liaisons carbone-carbone aliphatiques multiples,
(B) 1-10% en poids d'organopolysiloxanes linéaires présentant des atomes d'hydrogène liés par Si,
ou, au lieu de (A) et (B),
(C) 30-60% en poids d'organopolysiloxanes linéaires qui présentent des radicaux liés par SiC, dotés de liaisons carbone-carbone aliphatiques multiples et des atomes d'hydrogène liés par Si et
(D) au moins un catalyseur d'hydrosilylation.
